**Europäisches Patentamt**

**European Patent Office**

**Office européen des brevets**

(11) Veröffentlichungsnummer: **0 116 128**
**A1**

(12) # EUROPÄISCHE PATENTANMELDUNG

(21) Anmeldenummer: **83111343.6**

(22) Anmeldetag: **12.11.83**

(51) Int. Cl.³: **C 08 J 9/36**
**//C08L61/06**

(30) Priorität: **23.12.82 DE 3247754**

(43) Veröffentlichungstag der Anmeldung:
**22.08.84 Patentblatt 84/34**

(84) Benannte Vertragsstaaten:
**BE CH DE FR GB IT LI NL**

(71) Anmelder: **DYNAMIT NOBEL AKTIENGESELLSCHAFT**
**Postfach 1209**
**D-5210 Troisdorf, Bez. Köln(DE)**

(72) Erfinder: **Piotrowski, Bernd, Dr.**
**Alte Lohmarer Strasse 84**
**D-5204 Lohmar(DE)**

(72) Erfinder: **Weissenfels, Franz, Dr.**
**Am Grafenkreuz 17**
**D-5200 Siegburg(DE)**

(72) Erfinder: **Lang, Egon**
**Lindlaustrasse 41**
**D-5210 Troisforf(DE)**

(54) Verfahren zur Verbesserung des Gasaustausches bei offenporigen Phenolharzschäumen.

(57) Vorliegende Erfindung betrifft die Behandlung frisch hergestellter offenporiger Phenolharzschäume in einem Hochfrequenzfeld. Diese Behandlung ermöglicht eine sehr schnelle Entfernung des in den Poren verbliebenen Treibmittels sowie des zurückgehaltenen Formaldehyds. Die Behandlung ersetzt das zeitaufwendige Belüften des Phenolharzschaums, das bisher notwendig war, um eine gute Wasseraufnahmegeschwindigkeit und Wasseraufnahmefähigkeit zu erreichen. Die erfindungsgemäß behandelten Phenolharzschäume zeigen direkt nach ihrer Behandlung diese für die Verwendung als Blumensteckschäume wichtigen guten Eigenschaften.

Troisdorf, den 15. Dez. 1982
OZ 82093 Dr.Sk/Bd

DYNAMIT NOBEL AKTIENGESELLSCHAFT
Troisdorf Bez. Köln

Verfahren zur Verbesserung des Gasaustauschs bei offenporigen Phenolharzschäumen

Gegenstand der vorliegenden Erfindung ist ein Verfahren zur Verbesserung des Gasaustauschs bei offenporigen Phenolharzschäumen. Das Verfahren ermöglicht einen schnellen Austausch des in den Schäumen nach deren Herstellung noch enthaltenen Treibmittels und des Formaldehyds gegen Luft, und man erhält Schäume mit einem äußerst geringen Restgehalt an Treibmitteln und Formaldehyd.

Die Herstellung von offenporigen Phenolharzschäumen wird beispielsweise in der DE-OS 28 27 542 beschrieben. Dabei erfolgt das Aufschäumen des Phenolresolharzes mit niedrig siedenden Treibmitteln unter Mitverwendung von organischen Sulfonsäuren oder anorganischen Säuren als Härter. Die Aufschäumtemperatur liegt bis zu etwa $100^\circ$C. Während des Aufschäumvorgangs härten die Phenolresolharze, die bereits vor dem Aufschäumen die notwendigen Zellregulatoren und sonstige Zuschlagstoffe enthalten, aus. In den Poren des ausgehärteten Produkts verbleiben dabei immer

- 2 -

noch Reste des Treibmittels sowie ggf. von Formaldehyd, die für die spätere Anwendung der Schäume, z.B. als Blumensteckschäume oder Substratmaterial sich störend auswirken.

Phenolharzschäume, in deren Poren sich Treibmittel und Formaldehyd befinden, haben beispielsweise eine verringerte Wasseraufnahmefähigkeit, die beim Einsatz der Schäume als Blumensteck- oder Substratschaum bis auf geringe Reste unerwünscht sind. Die Schäume werden bisher deshalb mehrere Stunden belüftet, um einen Austausch dieser Gase gegen Luft zu bewirken. Dieser Vorgang dauert jedoch mehrere Stunden bis Tage und ergibt oft auch dann noch, besonders hinsichtlich des Formaldehydgehalts, unbefriedigende Ergebnisse.

Es bestand demzufolge die Aufgabe, den Gehalt an Treibmitteln und Formaldehyd in frisch aufgeschäumten offenporigen Phenolharzschäumen schnell auf solche Werte herabzusetzen, die eine möglichst hohe und schnelle Aufnahme von Wasser in den Schaum ermöglichen.

In Erfüllung dieser Aufgabe wurde nun ein Verfahren zur Verbesserung des Gasaustauschs bei offenporigen Phenolharzschäumen gefunden, das dadurch gekennzeichnet ist, daß man die Schäume einem elektromagnetischem Wechselfeld im Hochfrequenzbereich aussetzt.

Bei Anwendung der erfindungsgemäßen Verfahrensweise lassen sich innerhalb einiger Sekunden bis Minuten die genannten Gase aus den Schaumstoffporen hinreichend und gegen Luft austauschen. Der Gehalt eines so behandelten offenporigen Phenolharzschaumes an Treibmitteln und Formaldehyd ist dann manchmal noch geringer als nach 24-stündiger Lagerung in zirkulierender Frischluft und es wird von dem Schaum mindestens die gleiche Wassermenge aufgenommen, die ein in gleicher Weise hergestellter Schaum nach einer Lagerung von 24

Stunden unter laufenden Frischluftzufuhr aufnimmt.

Unter einem offenporigen Phenolharzschaum wird erfindungsgemäß ein solcher Schaum verstanden, der mindestens 80 % an offenen Poren besitzt und eine Dichte zwischen 5 und 60 kg/m$^3$ aufweist. Die durchschnittliche Zellengröße dieser Schäume soll zwischen 0,1 und 0,5 vorzugsweise zwischen 0,1 und 0,25 mm betragen. Die gemäß DIN 53 421 bestimmte Druckfestigkeit dieser Schäume liegt zwischen 0,1 und 1,3 kp/cm$^2$.

Erfindungsgemäß wird angestrebt, den Schäumen eine Wasseraufnahmefähigkeit zu verleihen, die es ermöglicht, daß der Schaum mindestens 80 % seines Volumens an Wasser aufnimmt. Die Geschwindigkeit dieser Wasseraufnahme soll so groß sein, daß in mindestens 10 Minuten 2 l Schaumvolumen diese Wassermenge aufnehmen. Bei einer erfindungsgemäßen Behandlung werden diese Werte innerhalb kürzester Zeit erreicht.

Die Herstellung von Phenolharzschäumen mit den o.gen. physikalischen Eigenschaften erfolgt auf an sich bekannte Weise: Das die Zellregulatoren und sonstige Zuschlagstoffe wie z.B. Farbstoffe und Flammschutzmittel, enthaltene Phenolresolharz wird unter Zusatz von Treibmitteln und Härtersäuren bei Temperaturen bis 100°C aufgeschäumt. Als Treibmittel werden üblicherweise niedrig siedende Kohlenwasserstoffe oder Chlorfluorkohlenwasserstoffe und als Härtersäuren, z.B. Toluol- p-Phenol oder Benzolfulfonsäuren eingesetzt. Der Aufschäumvorgang kann diskontinuierlich oder kontinuierlich durchgeführt werden. Die auf diese Weise geschäumten Phenolharzschaumblöcke enthalten direkt nach dem Aufschäumen und Aushärten je nach angewendeter Schaumstoffrezeptur bzw. je nach gewünschter Schaumstoffdichte zwischen 4 und 25 Gew.-% Treibmittel und zwischen 15 und 400 mg Formaldehyd/l Schaumstoff. Durch die er-

:.. 0116128

- 4 -

findungsgemäße Verfahrensweise werden diese Werte auf $\angle 3,0$ Gew.-% für die Treibmittel und auf $\angle 60$ mg Formaldehyd/1 Schaumstoff gesenkt. Die Wasseraufnahmegeschwindigkeit die Wasseraufnahme und das Wasserretentionsvermögen der so behandelten Schaumstoffe ist mindestens genauso gut wie bei Schäumen, die während einer längeren Zeit einer Belüftung ausgesetzt waren.

Die Schaumstoffblöcke, die erfindungsgemäß der Hochfrequenzbehandlung unterworfen werden, sollten maximal eine Schichtdicke von 500 mm besitzen. Vorzugsweise liegt die Schichtdicke zwischen 80 und 250 mm. Beim Behandeln von Schaumstoffblöcken innerhalb der bevorzugten Abmessungen ist von Vorteil, mehrere solcher Blöcke in einem luftdurchlässigen Behälter unterzubringen und diesen Behälter dem Hochfrequenzfeld auszusetzen. Diese Arbeitsweise hat den Vorteil, daß innerhalb des gesamten, dem Hochfrequenzfeld ausgesetzten, Schaumguts annähernd gleiche Temperaturen herrschen und der von den Gasen aus dem Inneren der Blöcke zurückzulegende Weg nicht zu groß ist. Als Behälter empfehlen sich dabei gasdurchlässige Verpackungen, wie z.B. nicht luftdicht verschlossene oder perforierte Wellpappe-Kartons.

Aufgrund der Einwirkung des Hochfrequenzwechselfeldes nimmt der Schaumstoff Energie auf, die sich in einer Erwärmung des Schaumstoffs äußert. Diese Energieaufnahme nimmt zu Beginn der Hochfrequenzbehandlung stetig zu, erreicht dann ein Maximum und fällt daraufhin wieder ab. Als Maß für die von dem Schaumstoff aufgenommene Energie dient z.B. praktischerweise die Stromstärke, die am Hochfrequenzgenerator gemessen wird. Weiterhin ist es möglich, die aufgenommene Energie indirekt durch Messung der Temperatur im Inneren des Schaumstoffs zu bestimmen.

- 5 -

Hierbei durchläuft die Temperatur des Schaumstoffes ein Maximum, das etwa zwischen 60 und 120°C, vorzugsweise zwischen 80 bis 100°C liegt.

Der frisch hergestellte Phenolharzschaum mit erhöhten Gehalten an Treibmitteln und Formaldehyd wird dem Hochfrequenzfeld so lange ausgesetzt, bis das Maximum der Energieaufnahme überschritten ist. Es empfiehlt sich, unmittelbar nach Überschreiten des Maximums die Hochfrequenzbehandlung abzubrechen, da bei einer längeren Behandlung die Benetzungsfähigkeit der Schäume und damit ihre Wasseraufnahmegeschwindigkeit wieder langsam abnehmen. Auch führt eine darüber hinaus längere Behandlung leicht zu unerwünschten Verfärbungen des Schaumstoffs, besonders wenn dieser, wie z.B. bei Blumensteckschäumen, grüne Farbstoffe enthält. Unter einer Hochfrequenzbehandlung soll erfindungsgemäß eine Behandlung sowohl im HF- als auch im UHF-Bereich $> 10^6$ Hz verstanden werden.

Die erfindungsgemäße Behandlung empfiehlt sich besonders bei frisch hergestellten offenporigen Phenolharzschäumen. Es ist dabei nicht notwendig, direkt unmittelbar nach der Herstellung die Behandlung durchzuführen; auch eine Behandlung einige Stunden nach der Herstellung ergibt den gleichen Erfolg. Es ist selbstverständlich, daß ein bereits ausgelüfteter Phenolharzschaumblock, der bereits mehrere Tage gelagert ist, eine erfindungsgemäße Behandlung aus den vorher genannten Gründen nicht mehr nötig hat, weil der Gehalt eines solchermaßen gelagerten Phenolharzschaums an Restgehalten an Treibmitteln und Formaldehyd bereits sehr niedrig ist. Prinzipiell ist es jedoch auch möglich, auch bereits einen mehrere Stunden gelagerten Phenolharzschaum erfindungsgemäß zu behandeln, um auch noch die letzten Reste an Treibmitteln und Formaldehyd aus den Poren zu entfernen.

0116128

Beispiele

Die offenporigen Phenolharz-Schaumstoffe A und B, die für die HF-Versuche der Beispiele 1 und 2 benutzt wurden, wurden auf Basis eines im Handel zur Herstellung von offenporigen Schäumen erhältlichen flüssigen Phenol-Resol-Harzes (Harz DYNAPOR T 910 der Fa. Dynamit Nobel AG, Troisdorf) hergestellt. Für Schaum A wurde als Treibmittel n-Pentan (12 Vol.-% bezogen auf das Harz T 910), für Schaum B wurde als Treibmittel Trifluortrichlorethan (10 Vol.-% bezogen auf das Harz T 910) und als Härter in beiden Fällen eine 65%ige wäßrige Lösung von p-Phenolsulfonsäure (4 Vol.-% bezogen auf das Harz T 910) eingesetzt.

Die HF-Behandlung der Schäume erfolgte in der Weise, daß je 21 Stück aus einem frisch hergestellten 3 m³ Schaumstoffblock herausgeschnittene ziegelsteingroße Schaumstoffstücke (Abmessung 230 x 110 x 75 mm) in einem nicht luftdicht verschlossenen Wellpappekarton (Abmessung 53 x 35 x 25 cm) gepackt wurden und die Schaumstoffziegel dann in dieser Verpackung während 38 sec. einem HF-Feld ausgesetzt wurden, wobei der Elektrodenabstand mit 27 cm etwa der Kartonhöhe (25 cm) entsprach. 10 Min. (bzw. 24 Stunden in einem weiteren analog durchgeführten Versuch) nach der HF-Behandlung wurden die Schaumstoffziegel dem Karton entnommen und die Eigenschaften 5 - 8 (s. Tabellen Beispiel 1 und 2) ermittelt. Die in den Tabellen angegebenen Werte zu 5. und 6. sind Mittelwerte von je 21 Schaumstoffziegeln (= eine Kartonfüllung). Zwischen der HF-Behandlung der Schäume und der Ermittlung der "(24 Stunden)"-Werte der Tabellen 1 und 2 wurden die Kartons und die darin enthaltenen Schaumstoffziegel in einem Polyethylen-Folienbeutel (PE-Foliendicke ca. 0,15 mm) eingeschweißt, um einen weiteren Treibmittel-Luft-Austausch durch normale Belüftung zu verhindern.

Der für die Versuche benutzte HF-Generator hatte eine HF-Ausgangsleistung von 6 kw. Die Frequenz des Wechselfeldes betrug 27,12 MHz.

Die in den Tabellen 1 und 2 aufgeführten Eigenschaften der Schaumstoffe wurden wie folgt bestimmt:

### 1. Dichte (trocken)

Aus Schaumstoffplatten ausgestanzte zylinderförmige Prüfkörper mit einem Durchmesser von 50 mm und einer Länge von 65 mm (= 127 cm$^3$) wurden 24 Stunden bei 80°C in einem Umluftwärmeschrank getrocknet und nach Erkalten in einem Exsikkator über Silicagel aus Volumen und Gewicht die Dichte bestimmt.

### 2. Anteil an offenen Poren

Messung mit Beckmann Air-Comparison-Pyknometer.

### 3. Durchschnittliche Zellendurchmesser

Durch Raster-Elektronenmikroskopische-Aufnahmen der Schaumstruktur bei einer Vergrößerung von 1 : 100.

### 4. Wasseraufnahmefähigkeit und Wasseraufnahmegeschwindigkeit

Ein ziegelsteinförmiges Schaumstoffstück (Länge = 230, Breite = 110, Dicke = 75 mm) wird auf eine Wasseroberfläche (Aqua destillata, Temperatur 20°C) aufgelegt und die Zeit beobachtet, in der sich der Prüfkörper mit Wasser vollsaugt, so daß er total benetzt ist. Die Wasseraufnahme wird durch Wägen bestimmt. In der Tabelle sind die Mittelwerte von jeweils 20 Bestimmungen angegeben.

Tabelle 1: (Beispiel 1)

Eigenschaftswerte von Schaum A vor und nach einer HF-Behandlung

1. Dichte                        $17,3 \text{ kg/m}^3$

2. Anteil an offenen Zellen      $91,1 \%$

3. Druckfestigkeit            $650 \text{ g/cm}^2$

4. Mittl. Zellendurchmesser     $0,28 \text{ mm}$

| Vorbehandlung der Schaumstoffprüfkörper (230 x 110 x 75 mm) | | I<br>ca. 30 Min. nach Schaumstoff-Herstellung | II<br>nach 24 Stunden offener Lagerung bei Raumtemperatur | III<br>ca. 30 Min. nach Schaumstoff-Herstellung und HF-Behandlung | IV<br>nach Schaumstoff-Herstellung, HF-Behandlung und 24 Stunden Ablagerung |
|---|---|---|---|---|---|
| 5. Wasseraufnahmegeschwindigkeit | Min/sec. | >15'00" | 5'21" | 3'21" | 3'05" |
| 6. Wasseraufnahme | Vol.% | 36 (n.15 Min.) | 86,3 | 88,1 | 88,7 |
| 7. Gehalt an freiem Formaldehyd | mg/l | 254 | 85 | 46 | 43 |
| 8. Gehalt an n-Pentan | Gew.-% | 7,9 | 1,5 | 0,9 | 0,8 |

**Tabelle 2:** (Beispiel 2)

<u>Eigenschaftswerte von Schaum B vor und nach einer HF-Behandlung</u>

1. Dichte                  23,0 kg/m$^3$
2. Anteil an offenen Zellen   88  %
3. Druckfestigkeit        810  g/cm$^2$
4. Mittl. Zellendurchmesser  0,23 mm

| Vorbehandlung der Schaumstoffprüfkörper (230 x 110 x 75 mm) | | I<br>ca. 30 Min. nach Schaumstoff-Herstellung | II<br>nach 24 Stunden offener Lagerung bei Raumtemperatur | III<br>ca. 30 Min. nach Schaumstoff-Herstellung und HF-Behandlung | IV<br>nach Schaumstoff-Herstellung, HF-Behandlung und 24 Stunden Ablagerung |
|---|---|---|---|---|---|
| 5. Wasseraufnahmegeschwindigkeit | Min/sec. | 15'00" | 5'43" | 3'38" | 3'16" |
| 6. Wasseraufnahme | Vol.% | 32,1 (n.15 Min.) | 84,2 | 86,8 | 87,1 |
| 7. Gehalt an freiem Formaldehyd | mg/1 | 268 | 89 | 50 | 43 |
| 8. Gehalt an Trichlortrifluorethan | Gew.-% | 11,5 | 1,8 | 1,0 | 0,9 |

Troisdorf, den 15. Dez. 1982
OZ 82093  Dr.Sk/Bd

Patentansprüche

1. Verfahren zur Verbesserung des Gasaustauschs bei offenporigen Phenolharzschäumen, d a d u r c h g e k e n n z e i c h n e t , daß man die Schäume einem elektromagnetischen Wechselfeld im Hochfrequenzbereich aussetzt.

2. Verfahren gemäß Anspruch 1, dadurch gekennzeichnet, daß man die Behandlung so lange durchführt, bis das Maximum der Energieaufnahme des Schaums überschritten ist.

3. Verfahren gemäß Ansprüchen 1 oder 2, dadurch gekennzeichnet, daß die Behandlung so lange durchgeführt wird, bis der Schaum das Maximum seiner Massetemperatur überschritten hat.

4. Verfahren gemäß einem der Ansprüche 1 bis 3, dadurch gekennzeichnet, daß der Schaum in kompakter oder in Granulatform in Schichtdicken bis zu 500 mm vorliegt.

5. Verfahren gemäß einem der Ansprüche 1 bis 4, dadurch gekennzeichnet, daß mehrere Schaumstoffkörper in einer gasdurchlässigen Verpackung der Hochfrequenzbehandlung unterworfen werden.

**0116128**
Nummer der Anmeldung

# EUROPÄISCHER RECHERCHENBERICHT

Europäisches
Patentamt

EP 83 11 1343

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | US-A-3 821 337 (E.J. BUNCLARK et al.) <br> * Ansprüche; Spalte 2, Zeilen 23-27 * | 1-5 | C 08 J 9/36 // <br> C 08 L 61/06 |
| X | GB-A- 962 101 (R.C. BYNG) <br> * Ansprüche * | 1-5 | |
| Y | EP-A-0 037 470 (BASF) <br> * Ansprüche; Seite 10, Zeilen 10-14 * | 1-5 | |
| A | US-A-3 651 181 (L.Y. RAMAIKA) <br> * Ansprüche * | 1 | |

RECHERCHIERTE
SACHGEBIETE (Int. Cl. ³)

C 08 J

Der vorliegende Recherchenbericht wurde für alle Patentansprüche erstellt.

| Recherchenort <br> DEN HAAG | Abschlußdatum der Recherche <br> 09-04-1984 | Prüfer <br> DERAEDT G. |
|---|---|---|